# EUROPÄISCHE PATENTSCHRIFT

(11) **EP 0 451 316 B1**
(45) Veröffentlichungstag und Bekanntmachung des Hinweises auf die Patenterteilung: **24.11.1993**
(21) Anmeldenummer: 90107144.9
(22) Anmeldetag: 13.04.1990
(51) Int. Cl.: B60M 1/34

(54) **Verfahren zum Montieren eines Bahnsystems und hierfür geeigneter Verbinder**
Mounting process for a conductive railsystem and associated connector
Procédé de montage d'un système de rail conducteur et connecteur associé

(43) Veröffentlichungstag der Anmeldung: 16.10.1991
(73) Patentinhaber: Fahrleitungsbau GmbH, D-45329 Essen (DE)
(72) Erfinder: Lewandowski, Siegfried, D-4630 Bochum 7 (DE)
(74) Vertreter: Masch, Karl Gerhard, Dr.

(56) Entgegenhaltungen:
- EP-A- 0 197 811
- GB-A- 2 137 439

## Beschreibung

Die Erfindung betrifft einerseits ein Verfahren zum Montieren eines Bahnsystems aus Tragschienen und einem daran befestigten Schleifleitungssystem, das für jede Tragschiene zumindest zwei parallele, jeweils an einer Seite eine zurückversetzte Schleiffläche freigebende Stromschienen umfaßt, wobei die Tragschienen auf Stoß verlegt werden und wobei die Stromschienen mit von der Tragschiene abgewandter Schleiffläche mit Hilfe von Stützpunktklemmen an der jeweiligen Tragschiene befestigt werden und danach die einander zugeordneten Enden der Stromschienen mit jeweils einem Verbinder miteinander verbunden werden, und andererseits einen für dieses Verfahren geeigneten Verbinder.

Bei dem genannten Bahnsystem kann es sich beispielsweise um einen Hängebahnförderer handeln. Die Tragschienen können folglich zugleich auch als Fahrschienen dienen.

Im Rahmen der bekannten Maßnahmen der genannten Art (DE-C-33 11 791) wird das Schleifleitungssystem erst nach dem Verlegen der Tragschienen an diesen angebracht. Der Verbinder zum Verbinden der zugeordneten Enden der Stromschienen besteht aus vier Teilen, nämlich zwei Steckern, einer auf diese aufsteckbaren Metallhülse und einem isolierenden Abdeckteil. Zur Verbindung der Stromschienen wird in die beiden zugeordneten Enden der Stromschienen jeweils ein Stecker eingesetzt, auf deren freie, aus den Stromschienen vorstehende Enden die Metallhülse aufgeschoben wird; das ist nur möglich, wenn die einander zugeordneten Enden der Stromschienen in Längsrichtung noch nicht endgültig an der Tragschiene fixiert sind. Das Abdeckteil muß anschließend über den Zwischenraum zwischen Abdeckhülse und Tragschiene von hinten auf die Metallhülse aufgeschoben werden. Danach ist erst die endgültige Fixierung an den Tragschienen möglich. Alles das ist verhältnismäßig aufwendig und umständlich. Für die Montage vor Ort können nur Fachkräfte eingesetzt werden.

Der Erfindung liegt die Aufgabe zugrunde, das Bahnsystem fabrikmäßig so weit vorzufertigen, daß am Aufstellungsort nur noch Arbeiten durchgeführt werden müssen, die ohne weiteres von Hilfskräften durchgeführt werden können.

Hierzu lehrt die vorliegende Erfindung in verfahrensmäßiger Hinsicht, daß die Stromschienen vor der Verlegung der Tragschienen mit gegenüber der jeweiligen Tragschiene verkürzten Enden unter mittiger Längsfixierung an den Tragschienen befestigt werden und nach dem Verlegen der mit den Stromschienen versehenen Tragschienen die Verbinder ausschließlich durch zur Schleiffläche senkrechtes, zur Tragschiene hin erfolgendes Aufsetzen auf die Enden der Stromschienen aufgeklemmt werden. - Ein für dieses Verfahren besonders geeigneter Verbinder ist dadurch gekennzeichnet, daß er nur aus einem Klemmbügel mit zueinander parallelen, die zugeordnete Stromschiene überfassenden und mit Klemmausbildungen versehenen Klemmschenkeln und diese etwa mittig verbindendem Schleifflächensteg besteht, wobei in Längsrichtung der Tragschienen gesehen die Klemmschenkel länger und der Schleifflächensteg kürzer als der Abstand der zugeordneten Enden der Stromschienen sind.

Im Rahmen der erfindungsgemäßen Maßnahmen wird also das Schleifleitungssystem bis auf die Verbinder fabrikmäßig an den Tragschienen befestigt. Die Montage vor Ort wird wie bei der bisherigen Tragschienenverlegung vorgenommen, d. h. auf die Stromschienen braucht in montagetechnischer Hinsicht überhaupt keine Rücksicht genommen zu werden. Nach dem Verlegen der Tragschienen auf Stoß werden dann nur noch die Verbinder aufgeklipst. Wie ohne weiteres einzusehen ist, sind für diese Montagearbeiten vor Ort keine Spezialkräfte mehr erforderlich. Hinzu kommt der Vorteil, daß auch stets eine leichte Demontage und Reparatur wieder möglich ist.

Für die weitere Ausgestaltung bestehen im Rahmen der Erfindung mehrere Möglichkeiten. So kann der Verbinder als Leitungsverbinder für Stromschienen aus Metallschiene und an den Enden der Metallschienen entferntem Isoliermantel ausgeführt sein; tatsächlich ist die Entfernung des Isoliermantels an den Enden der Metallschienen fabrikmäßig viel leichter möglich als vor Ort. Jedenfalls ist ein solcher Verbinder vorzugsweise gekennzeichnet durch einen in einem Isoliergehäuse befestigten Metallbügel, wobei in Längsrichtung der Tragschienen gesehen das Isoliergehäuse länger und der Metallbügel kürzer als der Abstand der zugeordneten Enden des Isoliermantels ist; der Metallbügel stellt dann die leitende Verbindung zwischen den abisolierten Metallschienenenden her, während das Isoliergehäuse das Ganze bis auf die Schleiffläche abdeckt, so daß Berührungsschutz gewährleistet ist. Der Metallbügel wird zweckmäßigerweise aus Federbronze gefertigt. Im Anlagebereich seiner Klemmschenkel sollte dieser Metallbügel erhabene Kontaktpunkte aufweisen, mit deren Hilfe im Zuge des Arbeitens der Verbindung gebildete Korrosionsschichten gleichsam automatisch abgeschabt werden. Ohne weiteres besteht die Möglichkeit, den Metallbügel auch mit einer Anschlußleitung bzw. Einspeisungsleitung zu versehen. Da das Isoliergehäuse nicht separat vom Metallbügel handzuhaben ist, weist der Metallbügel nach einer bevorzugten Ausführungsform Halterungsausnehmungen für das Isoliergehäuse auf. Letzeres kann hinter dem Schleifflächensteg eine gegenüber diesem verkürzte Gehäusebrücke aufweisen; diese Gehäusebrücke steift den Verbinder weiter aus, wobei durch die Verkürzung sichergestellt ist, daß der Verbinder insoweit auch zwischen die zugeordneten Enden der Stromschienen eingeführt werden kann. Auf der anderen Seite kann der Verbinder aber ohne weiteres auch als Isolierverbinder ausgeführt sein; hierzu empfiehlt es sich, den Verbinder vollständig aus einem isolierenden Kunststoffmaterial zu fertigen. In allen Fällen empfiehlt es sich jedenfalls, den Verbinder mit Längsanschlägen für die Enden des Isoliermantels zu versehen. Längsanschläge für die Metallschienen der Stromschienen sind nicht erforderlich, weil diese Anschläge vom Schleifflächensteg automatisch gebildet sind.

Im folgenden wird die Erfindung anhand einer ein Ausführungsbeispiel darstellenden Zeichnung näher erläutert. Es zeigen
- Fig. 1: einen Querschnitt durch ein Bahnsystem,
- Fig. 2 und 3: eine Aufsicht auf den Gegenstand der fig. 1 vor und nach dem Aufsetzen eines Verbinders,
- Fig. 4: eine Aufsicht auf einen Metallbügel eines Verbinders,
- Fig. 5: eine Vorderansicht in Richtung des Pfeiles A auf den Gegenstand der Fig. 4,
- Fig. 6: eine Seitenansicht in Richtung des Pfeiles B auf den Gegenstand der Fig. 4,
- Fig. 7: eine Aufsicht auf ein Isoliergehäuse für den Metallbügel gemäß den Fig. 4 bis 6,
- Fig. 8: eine Vorderansicht des Isoliergehäuses in Richtung des Pfeiles C auf den Gegenstand der Fig. 7 und
- Fig. 9: eine Seitenansicht in Richtung des Pfeiles D auf den Gegenstand der Fig. 7.

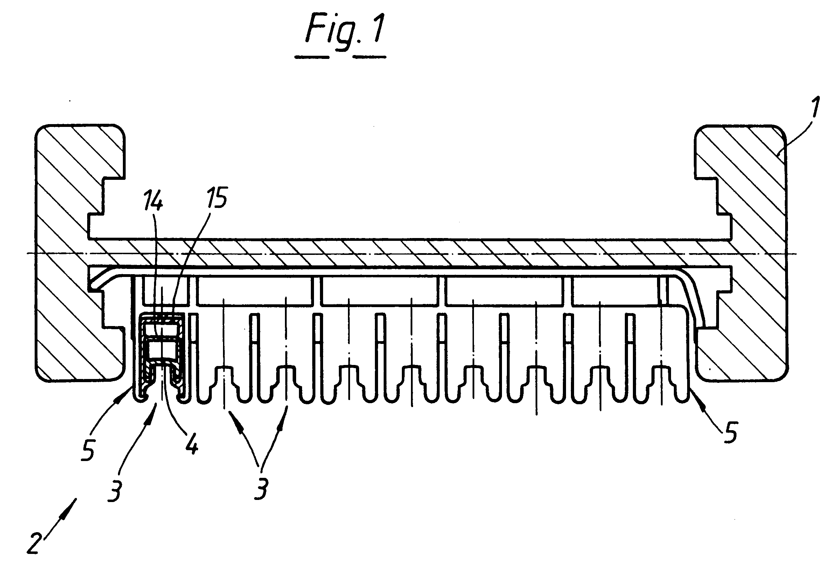

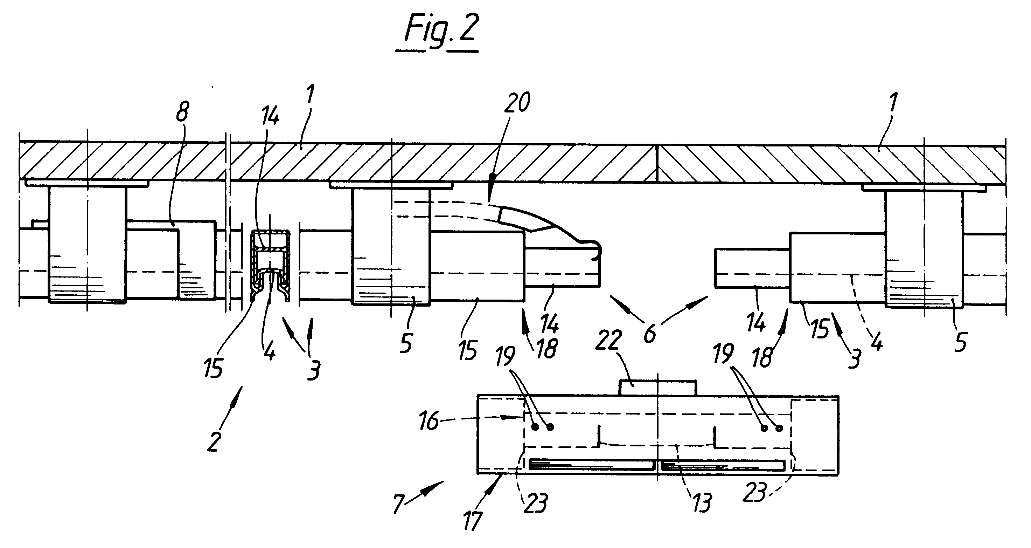

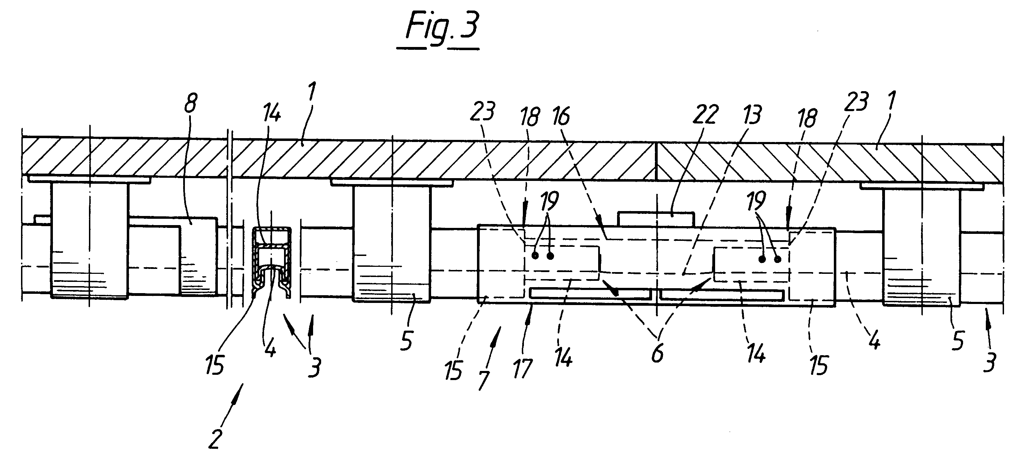

Das in den Figuren 1 bis 3 dargestellte Bahnsystem besteht in seinem grundsätzlichen Aufbau aus Tragschienen 1 und einem daran befestigten Schleifleitungssystem 2. Dieses Schleifleitungssystem 2 umfaßt für jede Tragschiene 1 neun zueinander parallele Stromschienen 3, die jeweils an derselben Seite eine zurückversetzte Schleiffläche 4 freigeben. Wie man aus den Figuren 2 und 3 ohne weiteres erkennt, sind die Tragschienen 1 auf Stoß verlegt. Die Stromschienen 3 sind mit von der Tragschiene 1 abgewandter Schleiffläche 4 mit Hilfe von Stützpunktklemmen 5 an der jeweiligen Tragschiene 1 befestigt. Die einander zugeordneten Enden 6 der Stromschienen 3 sind mit jeweils einem Verbinder 7 miteinander verbunden. Die Stromschienen 3 sind vor der Verlegung der Tragschienen 1 mit gegenüber der jeweiligen Tragschiene 1 verkürzten Enden 6 unter mittiger Längsfixierung (bei 8) an den Tragschienen befestigt. Danach ist dann der Verbinder 7 ausschließlich durch zur Schleiffläche 4 senkrechtes, zur Tragschiene hin erfolgendes Aufsetzen auf die Enden 6 der Stromschienen 3 aufgeklemmt.

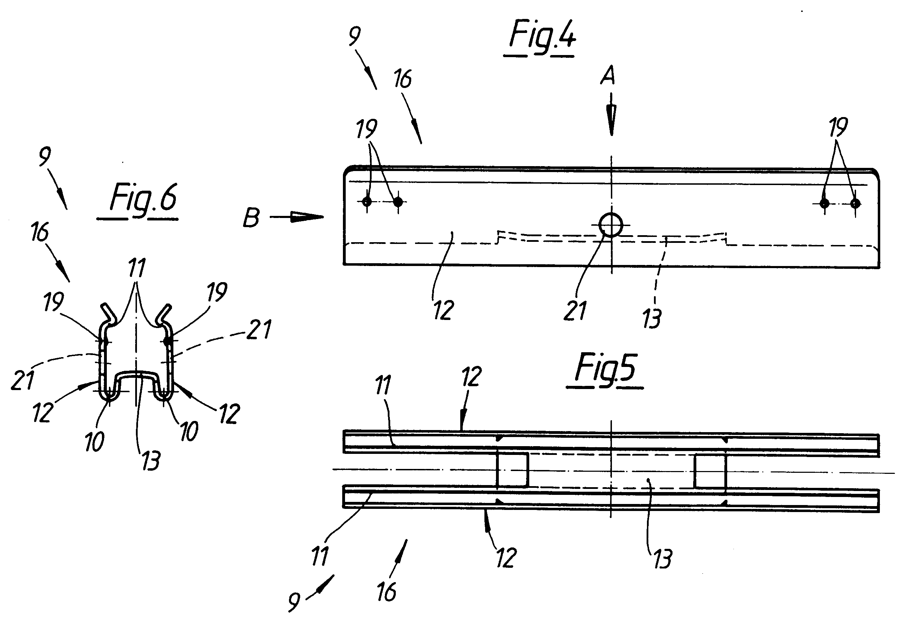

Der Aufbau des Verbinders 7 ergibt sich insbesondere aus den Figuren 4 bis 9. Er besteht aus einem Klemmbügel 9 mit zueinander parallelen, die zugeordneten Stromschienen 3 überfassenden und mit Klemmausbildungen 10, 11 versehenen Klemmschenkeln 12 und diese etwa mittig verbindendem Schleifflächensteg 13. In Längsrichtung der Tragschienen 1 gesehen sind die Klemmschenkel 12 länger als der Abstand der zugeordneten Enden 6 der Stromschienen 3, während der Schleifflächensteg 13 kürzer als der vorgenannte Abstand ist. Die Klemmausbildungen 10, 11 bestehen aus vorderen Haltebögen 10, die einen Anschlag beim Aufschieben bilden, und aus einer hinteren Klemmfalz 11, die nach dem Aufsetzen gleichsam hinter die Stromschiene 3 einfällt.

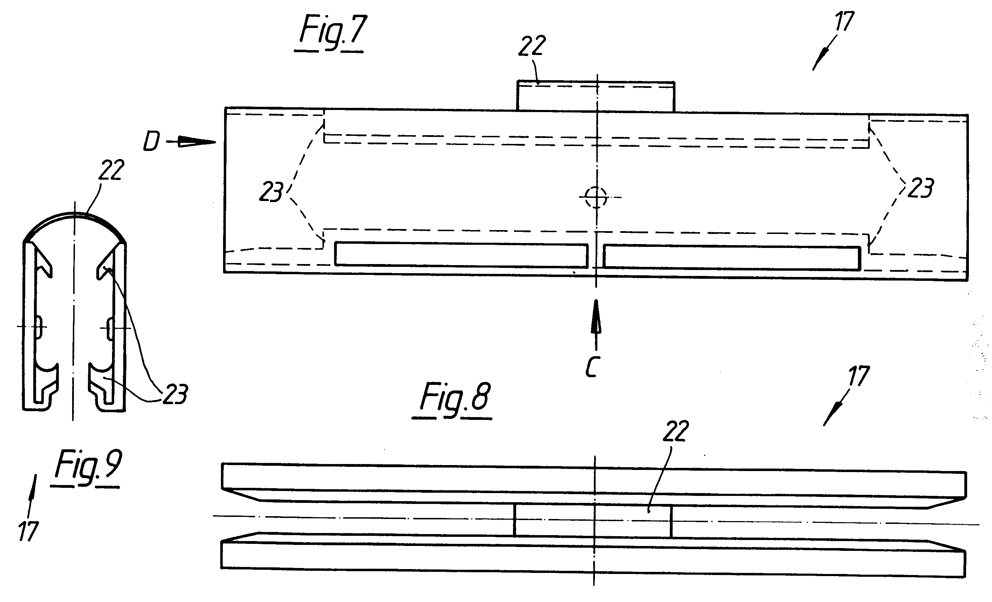

Dargestellt ist stets die Ausführungsform als Leitungsverbinder für Stromschienen 3 aus Metallschiene 14 und an den Enden der Metallschienen 14 entferntem Isoliermantel 15. Der Verbinder ist hier als Metallbügel 16 ausgeführt, der in einem Isoliergehäuse 17 befestigt ist, wobei in Längsrichtung der Tragschienen 1 gesehen das Isoliergehäuse 17 länger und der Metallbügel 16 kürzer als der Abstand der zugeordneten Enden 18 des Isoliermantels 15 ist. Der Metallbügel 16 ist in den Figuren 4 bis 6 im einzelnen dargestellt, während die Einzelheiten des Isoliergehäuses 17 aus den Figuren 7 bis 9 ersichtlich sind. Der aus Federbronze gefertigte Metallbügel 16 weist im Anlagebereich seiner Klemmschenkel 12 erhabene Kontaktpunkte 19 auf. In Fig. 2 ist schematisch angedeutet, daß der Metallbügel 16 auch mit einer Anschlußleitung 20 versehen sein kann. Schließlich und endlich erkennt man in Fig. 4, daß der Metallbügel 16 Halterungsausnehmungen 21 für das Isoliergehäuse 17 aufweist. Jedenfalls weist das Isoliergehäuse 17 hinter dem Schleifflächensteg 13 eine gegenüber diesem verkürzte Gehäusebrücke 22 auf.

Nicht dargestellt ist die Ausführungsform als Isolierverbinder, die vollständig aus einem isolierenden Kunststoff zu fertigen wäre. In allen Fällen empfiehlt es sich jedenfalls, Längsanschläge 23 für die Enden 18 des Isoliermantels 15 am Isoliergehäuse 17 vorzusehen.

Zum Montieren des Bahnsystems werden die Stromschienen 3 am Herstellungsort an den Tragschienen 1 befestigt und dann zum Aufstellungsort verbracht. Dort werden die Tragschienen 1 ohne Rücksicht auf die Stromschienen 3 auf Stoß verlegt. Anschließend werden lediglich die Verbinder 7 aufgesetzt, wie es sich aus einer vergleichenden Betrachtung der Fig. 2 und 3 ergibt.

## Patentansprüche

1. Verfahren zum Montieren eines Bahnsystems aus Tragschienen (1) und einem daran befestigten Schleifleitungssystem (2), das für jede Tragschiene (1) zumindest zwei parallele, jeweils an einer Seite eine zurückversetzte Schleiffläche (4) freigebende Stromschienen (3) umfaßt, wobei die Tragschienen (1) auf Stoß verlegt werden und wobei die Stromschienen (3) mit von der Tragschiene (1) abgewandter Schleiffläche (4) mit Hilfe von Stützpunktklemmen (5) an der jeweiligen Tragschiene (1) befestigt werden und danach die einander zugeordneten Enden (6) der Stromschienen (3) mit jeweils einem Verbinder (7) miteinander verbunden werden, **dadurch gekennzeichnet,** daß die Stromschienen (3) vor der Verlegung der Tragschienen (1) mit gegenüber der jeweiligen Tragschiene (1) verkürzten Enden (6) unter mittiger Längsfixierung an den Tragschienen (1) befestigt werden und nach dem Verlegen der mit den Stromschienen (3) versehenen Tragschienen (1) die Verbinder (7) ausschließlich durch zur Schleiffläche (4) senkrechtes, zur Tragschiene (1) hin erfolgendes Aufsetzen auf die Enden (6) der Stromschienen (3) aufgeklemmt werden.

2. Verbinder für das Verfahren nach Anspruch 1, dadurch gekennzeichnet, daß er nur aus einem Klemmbügel (9) mit zueinander parallelen, die zugeordneten Stromschienen (3) überfassenden und mit Klemmausbildungen (10, 11) versehenen Klemmschenkeln (12) und diese etwa mittig verbindendem Schleifflächensteg (13) besteht, wobei in Längsrichtung der Tragschienen (1) gesehen die Klemmschenkel (12) länger und der Schleifflächensteg (13) kürzer als der Abstand der zugeordneten Enden (6) der Stromschienen (3) sind.

3. Verbinder nach Anspruch 2 in der Ausführungsform als Leitungsverbinder für Stromschienen aus Metallschiene und an den Enden der Metallschienen entferntem Isoliermantel, gekennzeichnet durch einen in einem Isoliergehäuse (17) befestigten Metallbügel (16), wobei in Längsrichtung der Tragschienen (1) gesehen das Isoliergehäuse (17) länger und der Metallbügel (16) kürzer als der Abstand der zugeordneten Enden (18) des Isoliermantels (15) ist.

4. Verbinder nach Anspruch 3, dadurch gekennzeichnet, daß der Metallbügel aus Federbronze gefertigt ist.

5. Verbinder nach Anspruch 3 oder 4, dadurch gekennzeichnet, daß der Metallbügel (16) im Anlagebereich seiner Klemmschenkel (12) erhabene Kontaktpunkte (19) aufweist.

6. Verbinder nach einem der Ansprüche 3 bis 5, dadurch gekennzeichnet, daß der Metallbügel (16) mit einer Anschlußleitung (20) versehen ist.

7. Verbinder nach einem der Ansprüche 3 bis 6, dadurch gekennzeichnet, daß der Metallbügel (16) Halterungsausnehmungen (21) für das Isoliergehäuse (17) aufweist.

8. Verbinder nach einem der Ansprüche 3 bis 7, dadurch gekennzeichnet, daß das Isoliergehäuse (17) hinter dem Schleifflächensteg (13) eine gegenüber diesem verkürzte Gehäusebrücke (22) aufweist.

9. Verbinder nach Anspruch 2 in der Ausführungsform als Isolierverbinder, dadurch gekennzeichnet, daß er vollständig aus einem isolierenden Kunststoff gefertigt ist.

10. Verbinder nach einem der Ansprüche 2 bis 9, gekennzeichnet durch Längsanschläge (23) für die Enden (18) des Isoliermantels (15).

## Claims

1. A process for the assembly of a track system from mounting rails (1) and a contact line system (2) fastened to them, which includes for each mounting rail (1) at least two parallel conductor rails (3), each of which is exposed on one side of a sliding surface (4) which is set back, wherein the mounting rails (1) are laid end to end and wherein the conductor rails (3) are fastened to the respective mounting rail (1) with their sliding surface (4) remote from the mounting rail (1) by means of support clamps (5), and the ends (6) of the conductor rails (3) which are associated with each other are subsequently connected to each other with one connector (7) each time, characterised in that before the mounting rails (1) are laid the conductor rails (3), with ends (6) which are shortened with respect to the respective mounting rail (1), are fastened to the mounting rails (1) using a central longitudinal fixing, and after laying the mounting rails (1) provided with the conductor rails (3) the connectors (7) are clamped to the ends (6) of the conductor rails (3) solely by fixation being effected at right angles to the sliding surface (4) towards the mounting rail (1).

2. A connector for the process according to Claim 1, characterised in that it only comprises one clamping strap (9) with clamping limbs (12) which are parallel to each other, which grip the corresponding conductor rails (3), and which are provided with clamping shapes (10, 11), and the clamping strap has an approximately central connecting sliding surface stay (13), wherein viewed in the longitudinal direction of the mounting rails (1) the clamping limbs (12) are longer and the sliding surface stay (13) is shorter than the distance between the corresponding ends (6) of the conductor rails (3).

3. A connector according to claim 2 in the form of a conducting connector for conductor rails comprising metal rails and an insulating coating which is removed at the ends of the metal rails, characterised by a metal strap (16) fastened in an insulating sheath (17), wherein viewed in the longitudinal direction of the support rails (1) the insulating sheath (17) is longer and the metal strap (16) is shorter than the distance between the corresponding ends (18) of the insulating coating (15).

4. A connector according to Claim 3, characterised in that the metal strap is manufactured from spring bronze.

5. A connector according to Claims 3 or 4, characterised in that the metal strap (16) has raised contact points (19) in the locating region of its clamping limbs (12).

6. A connector according to any one of Claims 3 to 5, characterised in that the metal strap (16) is provided with a connection lead (20).

7. A connector according to any one of Claims 3 to 6, characterised in that the metal strap (16) has fixing recesses (21) for the insulating sheath (17).

8. A connector according to any one of Claims 3 to 7, characterised in that the insulating sheath (17) has a sheath bridge (22) behind the sliding surface stay (13) and which is shorter than the latter.

9. A connector according to Claim 2 in the form of an insulating connector, characterised in that it is manufactured entirely from an insulating plastic.

10. A connector according to any one of Claims 2 to 9, characterised by longitudinal stops (23) for the ends (18) of the insulating coating (15).

## Revendications

1. Procédé pour monter un système de voie constituée par des rails de support (1) et un système de lignes de contact (2), qui est fixé sur ces rails et comprend, pour chaque rail des support (1), au moins deux conducteurs de courant (3) parallèles, qui dégagent, respectivement sur un coté, une surface de contact à glissement (4) située en retrait, et selon lequel on dispose les rails de support (1) en aboutement et on fixe les conducteurs de courant (3) sur le rail respectif de support (1), avec leur surface de contact à glissement (4) tournée à l'opposé du rail des support (1), à l'aide de pinces des support (5), puis on raccorde entre elles les extrémités (6), réciproquement associées, des conducteurs des courant (3) à l'aide d'au moins un connecteur (7), caractérisé en ce qu'avant de poser les rails de support (1), on fixe les conductuers de courant (3) par des extrémités (6) raccourcies par rapport aux rails respectifs de support (1), à ces derniers, moyennant une fixation longitudinale centrée et qu'après la pose des rails de support (1) équipés des conducteurs de courant (3), on fixe par serrage les connecteurs (7) sur les extrémités des conducteurs de courant (3) exclusivement au moyen d'une mise en place perpendiculairement à la surface de contact à glissement (4), en direction du rail de support (1).

2. Connecteur pour la mise en oeuvre du procédé selon la revendication 1, caractérisé en ce qu'il est constitué uniquement par un étrier formant pince (9) comportant des branches de serrage (12) parallèles entre elles, qui s'engagent par-dessus les conducteurs de courant associés (3) et sont équipées d'éléments de serrage (10, 11), et par une barette (13) constituant la surface de contact à glissement et reliant d'une manière approximativement centrée les branches de serrage, les branches de serrage (12) et la barrette (13) à surface de contact à glissement étant respectivement plus longues et moins longue que la distance entre les extrémités associées (6) des conducteurs de courant (3), lorsqu'on regarde dans la direction longitudinale des conducteurs de courant (3).

3. Connecteur selon la revendication 2, agencé sous la forme d'un connecteur de lignes pour des conducteurs de courant formés de conducteurs métalliques et d'une gaine isolante retirée sur les extrémités des conducteurs métalliques, caractérisé par un étrier métallique (16) fixé dans un boîtier isolant (17), le boîtier isolant (17) et l'étrier métallique (16) étant respectivement plus long et plus court que la distance entre les extrémités associées (18) de la gaine isolante (15), lorsqu'on regarde dans la direction longitudinale des rails de support (1).

4. Connecteur selon la revendication 3, caractérisé en ce que l'étrier métallique est réalisé en un bronze pour ressorts.

5. Connecteur selon la revendication 3 ou 4, caractérisé en ce que l'étrier métallique (16) possède, dans la zone d'application de ses branches de serrage (12), des points de contact saillants (19).

6. Connecteur selon l'une des revendications 3 à 5, caractérisé en ce que l'étrier métallique (16) est équipé d'un conducteur de raccordement (20).

7. Connecteur selon l'une des revendications 3 à 6, caractérisé en ce que l'étrier métallique (16) possède des évidements de retenue (21) pour le boîtier isolant (17).

8. Connecteur selon l'une des revendications 3 à 7, caractérisé en ce que le boîtier isolant (17) possède, en arrière de la barrette (13) portant la surface de contact à glissement, un étrier (22) plus court que la barrette.

9. Connecteur selon la revendication 2, réalisé sous la forme d'un connecteur isolant, caractérisé en ce qu'il est réalisé entièrement en une matière plastique isolante.

10. Connecteur selon l'une des revendications 2 à 9, caractérisé par des butées longitudinales (23) pour les extrémités (18) de la gaine isolante (15).
